# EUROPEAN PATENT SPECIFICATION

(11) **EP 1 001 503 B1**
(45) Date of publication and mention of the grant of the patent: **15.10.2003**
(21) Application number: 99660171.2
(22) Date of filing: 29.10.1999
(51) Int. Cl.: H02G 3/04, H02G 9/06, H02G 1/08, B29C 47/00

(54) **Cable conduit, and method and apparatus for making a cable conduit**
KABELKANAL UND VERFAHREN UND VORRICHTUNG ZUR HERSTELLUNG EINES KABELKANALS
CONDUIT POUR CABLE ET METHODE ET APPAREIL DE FABRICATION D'UN CONDUIT POUR CABLE

(30) Priority: 09.11.1998 FI 982426
(43) Date of publication of application: 17.05.2000
(73) Proprietor: Uponor Innovation AB, 513 81 Fristad (SE)
(72) Inventor: Järvenkylä, Jyri, 15870 Hollola (FI); Hippeläinen, Esko, 15200 Lahti (FI)
(74) Representative: Huhtanen, Ossi Jaakko

(56) References cited:
- EP-A- 0 221 481
- EP-A- 0 458 139
- EP-A- 0 527 311
- US-A- 5 038 834
- US-A- 5 087 153
- US-A- 5 154 869

## Description

### BACKGROUND OF THE INVENTION

The invention relates to a cable conduit having a non-even inner surface.

The invention also relates to a method of making a cable conduit, the method comprising extrusion of the cable conduit and, substantially simultaneously with the extrusion, providing the cable conduit with a non-even inner surface.

The invention further relates to an apparatus for making a cable conduit, the apparatus comprising an extruder for extruding the cable conduit and means for providing the cable conduit with a non-even inside.

The aim is to provide cable protecting conduits with inner surfaces which minimize the friction between the cable and the inner surface of the conduit. This minimizes the forces required for feeding the cable inside the conduit and thus reduces the risk of damage to the cable.

German utility model 29 514 123 discloses a cable conduit having an inner surface provided with transverse ridges and grooves. To make such a conduit is quite complex, and the conduit is consequently costly. Furthermore, the friction properties of the inner surface of the conduit are not sufficiently good in every respect.

European publication 0 359 128 discloses a cable conduit whose inner surface is provided with slip agent and longitudinal grooves and bulges. European publication 0 326 711, in turn, discloses a two-layer conduit, in whose inner layer slip agent has been mixed. The inner surface is also provided with a longitudinal grooving. Longitudinally ridged or grooved conduits have been found to be inferior in long cable feeds, the conduit tending to get twisted during installation. The ridges subject the cable to a heavy torsion in the direction of the ridge and particularly in installation of optical cables there is a risk of damage to the cable.

German Offenlegungsschrift 3 529 541 discloses a cable conduit having straight or spiral sliding necks. German utility model 29 706 513, in turn, discloses a plastic pipe having straight or spiral or arched grooves. The use of straight necks or grooves produces drawbacks similar to those presented in the previous paragraph. The use of spiral or arched grooves also causes problems in long cable feeds, the conduit tending to get twisted during installation. A further drawback is the twisting force which always acts in the same direction.

US patent 5,154,869 discloses a cable conduit having grooves or ridges that run as waves. This avoids the problems caused by twisting of the conduit, but even high torsional tensions may be locally present in the steep folding points of the lines. A mandrel which alternately rotates clockwise and counterclockwise is used for making the conduit. Because of the required rotational apparatus and synchronization, the apparatus is quite complex and consequently the conduit is expensive.

EP 527311 discloses a cable conduit having grooves that run as waves. US 5,038,834 discloses an encasing tube for enclosing tensioning cable in concrete structures. The wall of the encasing tube includes spiralling protrusions. First protrusions and second protrusions run either in different directions or in the same direction but at different pitches.

It is an object of the present invention to provide a cable conduit and a method and apparatus for making same, avoiding the above drawbacks.

The cable conduit of the invention is characterized in that the inner surface of the cable conduit is provided with point formed supporting points for diminishing the friction between the cable and the cable conduit whereby the supporting points are formed either by crosswise grooves, necks between the grooves forming the supporting points or crosswise ridges, the crossing points of the ridges forming the supporting points.

The method of the invention is characterized in that during extrusion of the cable conduit, its inside is provided with point formed supporting points for diminishing the friction between the cable and the inner surface of the cable conduit whereby the supporting points are formed either by crosswise grooves, necks between the grooves forming the supporting points or crosswise ridges, the crossing points of the ridges forming the supporting points.

The apparatus of the invention is characterized by the apparatus comprising means for providing the inside of the cable conduit with point formed supporting points for diminishing the friction between the cable and the inner surface of the cable conduit whereby the supporting points are formed either by crosswise grooves, necks between the grooves forming the supporting points or crosswise ridges, the crossing points of the ridges forming the supporting points.

It is an essential idea of the invention that the inner surface of the cable conduit is provided with supporting points, whereby a cable inside the conduit is in contact with the inside of the conduit substantially only by the supporting points. It is the idea of a preferred embodiment that the cable conduit is provided with at least two sets of ridges or grooves, the first ridges or grooves extending in the shape of a helical line in a first direction and the second ridges or grooves extending in an opposite direction with respect to the first ridges or grooves, providing the inner surface of the cable conduit with crosswise ridges or grooves. It is the idea of a second preferred embodiment that the ridges or grooves extending in opposite directions have substantially equal pitch angles. It is the idea of a third preferred embodiment that the cable conduit is provided with grooves by means of at least one shaping means rotating clockwise and at least one shaping means rotating counterclockwise, the outer surface of the shaping means comprising bulges which upon shaping provide the still soft plastic material with grooves. It is the idea of a fourth preferred embodiment that the first shaping means is succeeded by a shaping means rotating in an opposite direction with respect thereto, and thereafter still another shaping means rotating in the same direction as the first shaping means in substantially the same grooves. It is the idea of a fifth preferred embodiment that the inner surface of the cable conduit is provided with slip agent.

It is an advantage of the invention that the friction properties of the conduit can be made extremely advantageous, and the twisting caused by the conduit to the cable can be avoided even in long cable feeds. Furthermore, the cable is not subjected to any twisting forces even locally in steep curves. Equal pitch angles for the grooves and ridges most completely avoid the problems of twisted cables. Grooves provided on the inner surface of the conduit by the shaping means allow very simple and rapid manufacture of a cable conduit. The arrangement of a shaping means, which shapes the same grooves in the same direction as the first shaping means after the second shaping means in the apparatus, allows any burrs generated by the second shaping means at the crossing of the grooves to be eliminated and excessive bulges to be evened out. Once the inner surface of the cable conduit is provided with slip agent, the supporting points on the inner surface of the conduit will yield when the cable rests against the conduit at its strongest, and the cable comes into contact with the slip agent, which reduces the friction at the point of contact.

The invention will be described in more detail in the attached drawings, in which
Figure 1 is a cross-sectional view of a cable conduit of the invention seen from the end,
Figure 2 is a schematic cross-sectional side view of a cable conduit of the invention,
Figure 3 is a schematic cross-sectional side view of an apparatus of the invention for making a cable conduit of the invention, and
Figure 4 is a schematic cross-sectional side view of a second apparatus of the invention for making a cable conduit of the invention.

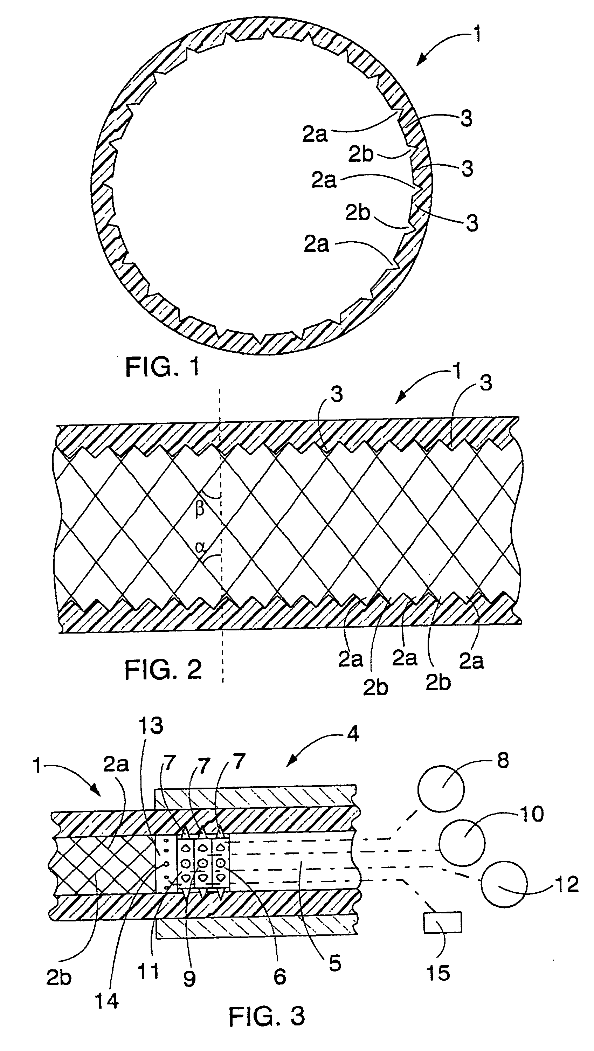

Figure 1 shows a cable conduit 1. The inner surface of the cable conduit 1 is provided with grooves 2a and 2b. Necks 3 form between the grooves 2a and 2b. The sizes of the grooves 2a and 2b and their mutual distance can vary according to the need. The grooves 2a and 2b can be significantly nearer each other, for example, whereby the necks 3 remain narrower than shown in Figure 1. The grooves 2a and 2b serve to diminish the friction between the cable conduit 1 and the cable to be positioned inside thereof.

Figure 2 is a cross-sectional side view of the cable conduit 1. The first grooves 2a are in the shape of a helical line and arranged to rotate in a first direction. The second grooves 2b are similarly in the shape of a helical line, but arranged to rotate in an opposite direction with respect to the first grooves 2a such that the first grooves 2a and the second grooves 2b are arranged crosswise, as is schematically shown in Figure 2. In the case shown in Figure 2, the pitch angle α of the first grooves 2a is substantially equal to the pitch angle β of the second grooves 2b. The necks 3 between the first grooves 2a and the second grooves 2b form diamond-shaped supporting points, along which a cable to be installed will slide extremely lightly. The construction of the invention does not necessarily require slip agent, but if slip agent is used, it is advantageously applied at the bottom of the grooves 2a and 2b. In this case the supporting points formed by the necks 3 will yield very easily e.g. when the cable rests locally against the conduit 1, and the cable comes into contact with the slip agent, whereby the friction between the cable and the cable conduit 1 is not very high irrespective of a strong resting against the cable conduit.

Figure 3 shows an extruder 4 for making the cable conduit 1. The extruder 4 comprises a mandrel 5 in the middle. The end of the mandrel 5 comprises a first shaping means 6 having bulges 7 for providing the still relatively soft cable conduit 1 with the first grooves 2a. A schematically shown rotating means 8 rotates the shaping means 6, whereby the first grooves 2a in the shape of a helical line are formed in the conduit as it moves forward.

A second shaping means 9, also comprising bulges 7, succeeds the first shaping means 6. The second shaping means 9 is rotated by a second rotating means 10 such that the second shaping means 9 rotates in a direction opposite to that of the first shaping means 6. This way the bulges 7 of the second shaping means 9 provide the second grooves 2b which are in the shape of a helical line and rotate in an opposite direction with respect to the first grooves 2a. The pitch angles of the grooves 2a and 2b depend on the relation between the speed of propagation of the conduit and the speed of rotation of the shaping means 6 and 9. A change in the speed of rotation of the shaping means 6 and 9 with respect to one another results in different crosswise patterns. However, the speeds of rotation are most preferably substantially equal, whereby the pitch angles of both grooves 2a and 2b are substantially equal.

The bulges 7 of the second shaping means 9 may cause the first grooves 2a to get partially occluded and a sharp burr to be created at the crossing point of the grooves. If the conduit is of a suitable material, said burr is not necessary harmful, but may diminish the friction and act as a contact surface for the cable and the conduit. However, should the intention be to finish the grooves, a third shaping means 11 is arranged to succeed the second shaping means 9 and it is rotated by a third rotating means 12. The bulges 7 of the third shaping means 11 are arranged to settle in the first grooves 2a and the third shaping means 11 is rotated in the same direction and at substantially the same speed as the first shaping means 6. This way the bulges 7 of the third shaping means 11 will open the first grooves 2a and the third shaping means 11 will even out excessive bulges. The first shaping means 6 and the third shaping means 11 can also be arranged as an integral construction, whereby they can be rotated by a common rotating means, as long as the speed of rotation of the apparatus with respect to the speed of propagation of the conduit is adjusted correctly.

In addition to or instead of the third shaping means 11, a trimming means 13 for evening out excessive bulges can be arranged at the rear of the apparatus. The rear part of the mandrel 5 can also be arranged to constitute the trimming means 13. The trimming means 13 can be provided with openings 14 via which slip agent can be fed into the grooves 2a and 2b. The slip agent can be e.g. silicon oil. Most preferably the slip agent is a wax-like material which efficiently adheres to the inner surface of the cable conduit between the supporting points. Figure 3 schematically shows feeding means 15 for the slip agent.

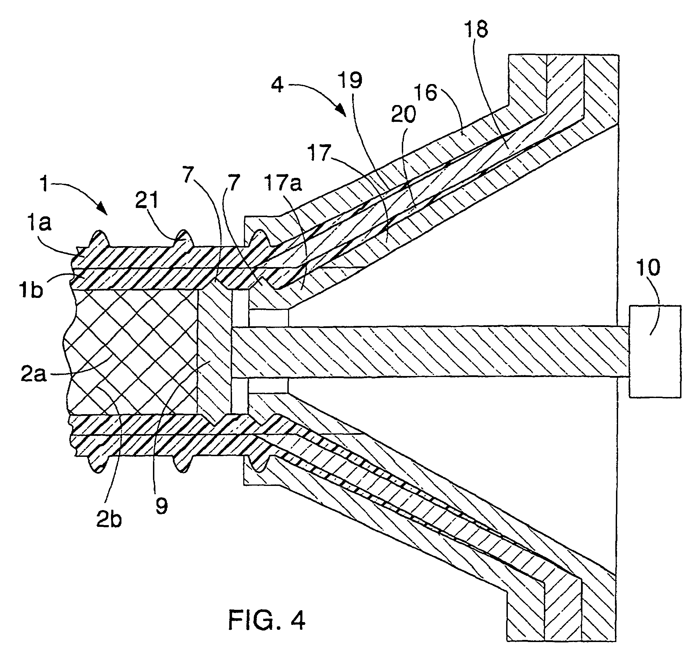

Figure 4 shows an extruder 4 having conical outer feeding means 16, inner feeding means 17 and middle feeding means 18. Between the outer feeding means 16 and the middle feeding means 18 is formed a conical outer feed gap 19. Similarly, between the inner feeding means 17 and the middle feeding means 18 is formed a conical inner feed gap 20. A conical extruder 4 produces a conduit without weld lines.

Furthermore, the solution of Figure 4 allows a two-layer pipe to be made by feeding a different material along the outer feed gap 19 than along the inner feed gap 20. This allows the inner layer to be made in such a way that its friction coefficient remains as low as possible. The inner layer can be made e.g. from plastic having a low friction coefficient, such as poly(tetrafluoroethylene), polyketone or poly(vinylidene fluoride). Furthermore, the inner layer can be of a mixture of a suitable plastic and an additive which lowers the friction coefficient. Strengthening fibres can also be added to the outer layer, such as liquid crystalline polymer, i.e. LCP fibres or glass fibres. In the apparatus of Figure 4, the fibres are oriented in the direction of a helical line. Furthermore, some electrically conductive or magnetic material, such as magnetite, can be added to the outer layer, whereby the cable conduit is able to protect the cable disposed therein against an electromagnetic pulse. Addition of a magnetic or electrically conductive material to the cable conduit also allows it to be traced from above the ground. An additional advantage is that such a cable conduit, when bent, retains its bent shape. The above advantages can also be achieved by coating the cable conduit e.g. with aluminium.

The feeding means 16 to 18 are typically arranged such that the outer feeding means 16 and the inner feeding means 17 are stationary and the middle feeding means 18 is rotated. However, if the inner feeding means 17 or at least its rear part 17a is made rotatable and if a bulge 7 is arranged at the rear end, a groove in the shape of a helical line forms on the inner surface of the conduit, whereby the inner feeding means 17 or its rear part 17a acts as the first shaping means, in addition to which only the second shaping means 9 is required to provide crosswise grooves. On the other hand, if the outer feeding means 16 is arranged rotatable and provided with a groove 16a, a ridge 21 in the shape of a helical line is formed on the outer surface of the cable conduit. The ridge 21 increases the ring stiffness of the cable conduit and, on the other hand, allows a traction-rigid joint to be achieved by the cable conduit being twisted inside the outer conduit provided with similar inner ridges or grooves. If required, the outer feeding means 16 can be stopped, whereby the outer surface of the conduit is not provided with ridges in the shape of a helical line, whereby such a point in the conduit can be used e.g. as a insert end, which is considerably easier to seal than a conduit whose outer surface is provided with ridges in the shape of a helical line. For the sake of clarity Figure 4 does not show the rotating means for rotating the feeding means 16 to 18. Furthermore, if required, there may be fewer or more feeding means and feed gaps formed therebetween than is shown in Figure 4.

The inner feeding means 17 or at least its rear part 17a can be arranged movable in a reciprocating manner in the axial direction, whereby the inner surface of the cable conduit can be provided with ring-shaped bulges in the peripheral direction. The bulges can be provided e.g. by arranging the rear part 17a of the inner feeding means 17 to move in a reciprocating manner such that it closes and opens the rear part of the inner feed gap 20. If the shaping means is then arranged stationary, the inner surface of the cable conduit will be provided with supporting points having an arched upper surface and being rectangular when viewed from the inside of the conduit. On the other hand, if the apparatus is provided with at least two shaping means rotating in opposite directions, supporting points having an arched upper surface and being diamond-shaped when viewed from inside of the conduit are provided. The cable slides extremely fluently and at low friction over such a convex supporting point.

The drawings and the related description are only intended to illustrate the idea of the invention. The details of the invention may vary within the scope of the claims. Accordingly, instead of grooves 2a and 2b, the conduit can be provided in a similar manner with crosswise ridges, whereby the supporting points are formed at the crossing points of the ridges. Furthermore, the cable conduit 1 may be either multi-layered or conventional single-layered. Still further, the conduit may be even or corrugated or ridged on the outside. Furthermore, particularly when conduits having large diameters are made, the crosswise grooves can be achieved e.g. by providing the tip of the mandrel 5 with rollers which mangle crosswise patterns on the inner surface of the conduit. Still further, the inner surface of the conduit can be easily provided with straight grooves in addition to the crosswise grooves in the shape of a helical line.

## Claims

1. A cable conduit having a non-even inner surface and an even outer surface, **characterized in that** the inner surface of the cable conduit is provided with point formed supporting points for diminishing the friction between the cable and the cable conduit whereby the supporting points are formed either by crosswise grooves (2a, 2b), necks (3) between the grooves (2a, 2b) forming the supporting points or by crosswise ridges, the crossing points of the ridges forming the supporting points.

2. A cable conduit as claimed in claim 1, **characterized by** the inner surface of the conduit comprising at least two grooves (2a, 2b) or ridges, the first grooves (2a) or ridges rotating in the shape of a helical line in a first direction and the second grooves (2b) or ridges rotating in an opposite direction with respect to the first grooves (2a) or ridges, the first grooves (2a) or ridges and the second grooves (2b) or ridges being arranged crosswise.

3. A cable conduit as claimed in claim 2, **characterized by** the pitch angle (α) of the first grooves (2a) or ridges being substantially equal to the pitch angle (β) of the second grooves (2b) or ridges.

4. A cable conduit as claimed in claim 2 or 3, **characterized by** the inner surface of the cable conduit (1) comprising crosswise grooves (2a, 2b), necks (3) between the grooves (2a, 2b) forming supporting points.

5. A cable conduit as claimed in any one of the preceding claims, **characterized by** the inner surface of the cable conduit (1) comprising slip agent.

6. A cable conduit as claimed in any one of the preceding claims, **characterized by** the cable conduit comprising at least two layers, the inner layer (1b) being made from a material or mixture of materials having a low friction coefficient.

7. A cable conduit as claimed in any one of the preceding claims, **characterized by** at least the outer layer (1a) of the cable conduit (1) being strengthened by fibres oriented in the direction of a helical line.

8. A cable conduit as claimed in any one of the preceding claims, **characterized by** the cable conduit comprising electrically conductive or magnetic material.

9. A method of making a cable conduit, the method comprising extrusion of the cable conduit and, substantially simultaneously with the extrusion, providing the cable conduit (1) with a non-even inner surface, **characterized in that** during extrusion of the cable conduit (1), its inside is provided with point formed supporting points for diminishing the friction between the cable and the inner surface of the cable conduit whereby the supporting points are formed either by crosswise grooves (2a, 2b), necks (3) between the grooves (2a, 2b) forming the supporting points or by crosswise ridges, the crossing points of the ridges forming the supporting points..

10. A method as claimed in claim 9, **characterized in that** upon extrusion of the cable conduit (1), the inside of the cable conduit (1) is provided with at least two grooves (2a, 2b) or ridges by rotating at least two shaping means (6, 9, 11) on the inner surface of the cable conduit (1) in opposite directions, the first shaping means (6) providing the inner surface of the cable conduit (1) with first grooves (2a) or ridges, which rotate in the shape of a helical line in a first direction, and the second shaping means (9) providing second grooves (2b) or ridges, which rotate in an opposite direction with respect to the first grooves (2a) or ridges, the first grooves (2a) or ridges and the second grooves (2b) or ridges being arranged crosswise.

11. A method as claimed in claim 10, **characterized in that** the speeds of rotation of the shaping means (6, 9, 11) are set substantially equal, the pitch angle (α) of the first grooves (2a) or ridges being substantially equal to the pitch angle (β) of the second grooves (2b) or ridges.

12. A method as claimed in claim 10 or 11, **characterized by** the shaping means (6, 9, 11) being used to provide the inside of the cable conduit (1) with grooves (2a, 2b).

13. A method as claimed in claim 12, **characterized by** the first grooves (2a) being formed by the first shaping means (6) by rotating it in a first direction, the second grooves (2b) being formed by the second shaping means (9) by rotating it in a second direction and by the first grooves (2a) being thereafter finished by the third shaping means (11) by rotating it in the same grooves (2a) with the first shaping means (6) in the same direction at substantially the same speed.

14. A method as claimed in any one of claims 10 to 13, **characterized in that** after the grooves (2a, 2b) or ridges are formed, the inner surface of the cable conduit (1) is evened out.

15. A method as claimed in any one of claims 9 to 14, **characterized by** slip agent being added to the inner surface of the cable conduit (1).

16. A method as claimed in any one of claims 9 to 15, **characterized by** the cable conduit (1) being made from at least two different materials in order to produce a conduit having at least two layers.

17. A method as claimed in any one of claims 9 to 16, **characterized by** the cable conduit (1) being extruded by a conical extruder (4).

18. A method as claimed in claim 17, **characterized by** the extruder (4) comprising conical feeding means (16 to 18), the inner feeding means (17) or at least its rear part (17a) being rotated and the rear part (17a) of the inner feeding means (17) comprising at least one bulge, whereby a groove in the shape of a helical line is formed in the cable conduit (1) upon rotation of the inner feeding means (17) or its rear part (17a).

19. A method as claimed in claim 17 or 18, **characterized by** the extruder (4) comprising conical feeding means (16 to 18), the outer feeding means (16) being rotated and the outer feeding means comprising a groove (16a), whereby a ridge (21) in the shape of a helical line is formed in the cable conduit (1) upon rotation of the outer feeding means (16).

20. A method as claimed in any one of claims 17 to 19, **characterized by** the extruder (4) comprising feeding means (16 to 18), the inner feeding means (17) or at least its rear part (17a) being moved in a reciprocating manner in the axial direction so as to provide the inner surface of the cable conduit (1) with bulges in the peripheral direction.

21. An apparatus for making a cable conduit, the apparatus comprising an extruder (4) for extruding the cable conduit (1) and means for providing the cable conduit (1) with a non-even inside, **characterized by** the apparatus comprising means for providing the inside of the cable conduit (1) with point formed supporting points for diminishing the friction between the cable and the inner surface of the cable conduit (1) whereby the supporting points are formed either by crosswise grooves (2a, 2b), necks (3) between the grooves (2a, 2b) forming the supporting points or by crosswise ridges, the crossing points of the ridges forming the supporting points.

22. An apparatus as claimed in claim 21, **characterized by** the apparatus comprising at least two shaping means (6, 9, 11) for providing at least two grooves (2a, 2b) or ridges, the first shaping means (6) for providing the grooves (2a) or ridges being arranged to rotate in a first direction and the second shaping means (9) for providing the second grooves (2b) or ridges being arranged to rotate in an opposite direction with respect to the first shaping means (6) in order to provide the inner surface of the cable conduit (1) with crosswise grooves (2a, 2b) or ridges.

23. An apparatus as claimed in claim 22, **characterized by** the shaping means (6, 9, 11) for providing the grooves (2a, 2b) or ridges being arranged to rotate in opposite directions at substantially the same speed, the pitch angle (α) of the first grooves (2a) or ridges being substantially equal to the pitch angle (β) of the second grooves (2b) or ridges.

24. An apparatus as claimed in claim 22 or 23, **characterized by** the apparatus comprising shaping means (6, 9, 11) for providing the grooves (2a, 2b) on the inner surface of the cable conduit (1 ).

25. An apparatus as claimed in claim 24, **characterized by** the shaping means (6, 9, 11) comprising bulges (7) for forming the grooves (2a, 2b).

26. An apparatus as claimed in claim 24 or 25, **characterized by** the first grooves (2a) being formed by the first shaping means (6), which is arranged rotatable in a first direction, the second grooves (2b) being formed by the second shaping means (9), succeeding the first shaping means (6) and arranged rotatable in an opposite direction with respect to the first shaping means (6), and the second shaping means (9) being succeeded by the third shaping means (11), arranged rotatable in the same direction as the first shaping means (6) at substantially the same speed, the third shaping means (11) being arranged to finish the first grooves (2a).

27. An apparatus as claimed in any one of claims 22 to 26, **characterized by** a trimming means (13) being arranged to succeed the means for providing the grooves (2a, 2b) or ridges, to even out the inner surface of the cable conduit (1 ).

28. An apparatus as claimed in any one of claims 21 to 27, **characterized by** the apparatus comprising feeding means (15) for feeding slip agent to the inner surface of the cable conduit (1).

29. An apparatus as claimed in any one of claims 21 to 28, **characterized by** the apparatus comprising at least three feeding means (16 to 18), between which at least two feed gaps (19, 20) are formed, the extruder (4) being arranged to make a cable conduit (1) comprising at least two layers.

30. An apparatus as claimed in any one of claims 21 to 29, **characterized by** the extruder comprising at least two conical feeding means (16 to 18), between which at least one conical feed gap (19, 20) is formed.

31. An apparatus as claimed in claim 30, **characterized by** the inner feeding means (17) or its read part (17a) being arranged rotatable and the rear part (17a) of the inner feeding means (17) being provided with a bulge (7), the feeding means or its rear part (17a), upon rotation, providing the inside of the cable conduit (1) with a groove (2a, 2b) in the shape of a helical line.

32. An apparatus as claimed in claim 30 or 31, **characterized by** the outer feeding means (16) being arranged rotatable and the outer feeding means (16) comprising at least one groove (16a), the outer feeding means (16), upon manufacture of the cable conduit (1), providing its outer surface with a ridge (21) in the shape of a helical line.

33. An apparatus as claimed in any one of claims 30 to 32, **characterized by** the inner feeding means (17) or at least its rear part (17a) being arranged to move in a reciprocating manner in the axial direction to provide the inner surface of the cable conduit (1) with a bulge in the peripheral direction.

## Patentansprüche

1. Kabelumhüllung mit einer nicht gleichmäßigen Innenfläche und einer gleichmäßigen Außenfläche,
**dadurch gekennzeichnet, dass**
die Innenfläche der Kabelumhüllung mit punktförmigen Auflagepunkten zum Verringern der Reibung zwischen dem Kabel und der Kabelumhüllung versehen ist, wobei die Auflagepunkte entweder von kreuzförmig angeordneten Nuten (2a,2b), Erhöhungen (3) zwischen den die Auflagepunkte bildenden Nuten (2a,2b) oder kreuzförmig angeordneten Rippen gebildet sind, wobei die Kreuzungspunkte der Rippen die Auflagepunkte bilden.

2. Kabelumhüllung nach Anspruch 1, **dadurch gekennzeichnet, dass** die Innenfläche der Umhüllung mindestens zwei Nuten (2a,2b) oder Rippen aufweist, die ersten Nuten (2a) oder Rippen in Form einer schraubenförmigen Linie in einer ersten Richtung verlaufen und die zweiten Nuten (2b) oder Rippen in relativ zu den ersten Nuten (2a) oder Rippen entgegengesetzter Richtung verlaufen und die ersten Nuten (2a) oder Rippen und die zweiten Nuten (2b) oder Rippen kreuzweise angeordnet sind.

3. Kabelumhüllung nach Anspruch 2, **dadurch gekennzeichnet, dass** der Teilungswinkel (α) der ersten Nuten (2a) oder Rippen dem Teilungswinkel (β) der zweiten Nuten (2b) oder Rippen im wesentlichen gleich ist.

4. Kabelumhüllung nach Anspruch 2 oder 3, **dadurch gekennzeichnet, dass** die Innenfläche der Kabelumhüllung (1) kreuzförmig angeordnete Nuten (2a, 2b) und Erhöhungen (3) zwischen den die Auflagepunkte bildenden Nuten (2a,2b) aufweist.

5. Kabelumhüllung nach einem der vorhergehenden Ansprüche, **dadurch gekennzeichnet, dass** die Innenfläche der Kabelumhüllung (1) ein Gleitmittel aufweist.

6. Kabelumhüllung nach einem der vorhergehenden Ansprüche, **dadurch gekennzeichnet, dass** die Kabelumhüllung mindestens zwei Schichten aufweist und die Innenschicht (1b) aus einem Material oder einer Materialmischung mit einem niedrigen Reibungskoeffizienten gefertigt ist.

7. Kabelumhüllung nach einem der vorhergehenden Ansprüche, **dadurch gekennzeichnet, dass** mindestens die Außenschicht (1a) der Kabelumhüllung (1) durch in Richtung einer schraubenförmigen Linie ausgerichtete Fasern verstärkt ist.

8. Kabelumhüllung nach einem der vorhergehenden Ansprüche, **dadurch gekennzeichnet, dass** die Kabelumhüllung ein elektrisch leitendes oder magnetisches Material aufweist.

9. Verfahren zum Herstellen einer Kabelumhüflung mit den Schritten des Extrudierens der Kabelumhüllung und des im wesentlichen gleichzeitig mit dem Extrudieren erfolgenden Versehens der Kabelumhüllung (1) mit einer nicht gleichmäßigen Innenfläche, **dadurch gekennzeichnet, dass** während des Extrudierens der Kabelumhüllung (1) deren Innenseite mit punktförmigen Auflagepunkten zum Verringern der Reibung zwischen dem Kabel und der Innenfläche der Kabelumhüllung versehen wird, wobei die Auflagepunkte entweder von kreuzförmig angeordneten Nuten (2a,2b), Erhöhungen (3) zwischen den die Auflagepunkte bildenden Nuten (2a,2b) oder kreuzförmig angeordneten Rippen gebildet sind, wobei die Kreuzungspunkte der Rippen die Auflagepunkte bilden.

10. Verfahren nach Anspruch 9, **dadurch gekennzeichnet, dass** beim Extrudieren der Kabelumhüllung (1) die Innenseite der Kabelumhüllung (1) mit mindestens zwei Nuten (2a,2b) oder Rippen versehen wird, und zwar durch Drehen mindestens zweier Formungseinrichtungen (6,9,11) in entgegengesetzten Richtungen auf der Innenfläche der Kabelumhüllung (1), wobei die erste Formungseinrichtung (6) die Innenfläche der Kabelumhüllung (1) mit ersten Nuten (2a) oder Rippen versieht, die in Form einer schraubenförmigen Linie in einer ersten Richtung verlaufen, und die zweite Formungseinrichtung (9) zweite Nuten (2b ) oder Rippen ausbildet, die relativ zu den ersten Nuten (2a) oder Rippen in entgegengesetzter Richtung verlaufen, wobei die ersten Nuten (2a) oder Rippen und die zweiten Nuten (2b) oder Rippen kreuzweise angeordnet sind.

11. Verfahren nach Anspruch 10, **dadurch gekennzeichnet, dass** die Drehgeschwindigkeiten der Formungseinrichtungen (6,9,11) im wesentlichen gleich eingestellt sind, wobei der Teilungswinkel (α) der ersten Nuten (2a) oder Rippen dem Teilungswinkel (β) der zweiten Nuten (2b) oder Rippen im wesentlichen gleich ist.

12. Verfahren nach Anspruch 10 oder 11, **dadurch gekennzeichnet, dass** die Formungseinrichtungen (6,9,11) zum Versehen der Innenseite der Kabelumhüllung (1) mit Nuten (2a,2b) verwendet werden.

13. Verfahren nach Anspruch 12, **dadurch gekennzeichnet, dass** die ersten Nuten (2a) von der ersten Formungseinrichtung (6) ausgebildet werden, und zwar durch Drehen der Formungseinrichtung in einer ersten Richtung, die zweiten Nuten (2b) von der zweiten Formungseinrichtung (9) ausgebildet werden, und zwar durch Drehen der Formungseinrichtung in einer zweiten Richtung, und die ersten Nuten (2a) anschließend mit der dritten Formungseinrichtung (11) fertigbearbeitet werden, und zwar durch Drehen der Formungseinrichtung in diesen Nuten (2a) zusammen mit der ersten Formungseinrichtung (6) in der gleichen Richtung und im wesentlichen mit der gleichen Geschwindigkeit.

14. Verfahren nach einem der Ansprüche 10 bis 13, **dadurch gekennzeichnet, dass** nach dem Ausbilden der Nuten (2a,2b) oder Rippen die Innenfläche der Kabelumhüllung (1) geebnet wird.

15. Verfahren nach einem der Ansprüche 9 bis 14, **dadurch gekennzeichnet, dass** das Gleitmittel auf die Innenfläche der Kabelumhüllung (1) aufgebracht wird.

16. Verfahren nach einem der Ansprüche 9 bis 15, **dadurch gekennzeichnet, dass** die Kabelumhüllung (1) aus mindestens zwei unterschiedlichen Materialien gefertigt ist, um eine Umhüllung mit mindestens zwei Schichten herzustellen.

17. Verfahren nach einem der Ansprüche 9 bis 16, **dadurch gekennzeichnet, dass** die Kabelumhüllung (1) von einem konischen Extruder (4) extrudiert wird.

18. Verfahren nach Anspruch 17, **dadurch gekennzeichnet, dass** der Extruder (4) konische Zuleitungseinrichtungen (16 bis 18) aufweist, die innere Zuleitungseinrichtung (17) oder zumindest ihr hinterer Teil (17a) gedreht wird und der hintere Teil (17a) der inneren Zuleitungseinrichtung (17) mindestens eine Ausbuchtung aufweist, wodurch beim Drehen der inneren Zuleitungseinrichtung (17) oder ihres hinteren Teils (17a) ein Nut in Form einer schraubenförmigen Linie in der Kabelumhüllung (1) ausgebildet wird.

19. Verfahren nach Anspruch 17 oder 18, **dadurch gekennzeichnet, dass** der Extruder (4) konische Zuleitungseinrichtungen (16 bis 18) aufweist, die äußere Zuleitungseinrichtung (16) gedreht wird und die äußere Zuleitungseinrichtung eine Nut (16a) aufweist, wodurch beim Drehen der äußeren Zuleitungseinrichtung (16) eine Rippe (21) in Form einer schraubenförmigen Linie in der Kabelumhüllung (1) ausgebildet wird.

20. Verfahren nach einem der Ansprüche 17 bis 19, **dadurch gekennzeichnet, dass** der Extruder (4) Zuleitungseinrichtungen (16 bis 18) aufweist, die innere Zuleitungseinrichtung (17) oder zumindest ihr hinterer Teil (17a) in axialer Richtung hin- und herbewegt wird, um in Umfangsrichtung Ausbuchtungen auf der Innenfläche der Kabelumhüllung (1) auszubilden.

21. Vorrichtung zu Herstellen einer Kabelumhüllung mit einem Extruder (4) zum Extrudieren der Kabelumhüllung (1) und einer Einrichtung zum Versehen der Kabelumhüllung (1) mit einer nicht gleichmäßigen Innenseite,
**dadurch gekennzeichnet, dass** die Vorrichtung eine Einrichtung zum Versehen der Innenseite der Kabelumhüllung (1) mit punktförmigen Auflagepunkten zum Verringern der Reibung zwischen dem Kabel und der Innenfläche der Kabelumhüllung (1) aufweist, wobei die Auflagepunkte entweder von kreuzförmig angeordneten Nuten (2a,2b), Erhöhungen (3) zwischen den die Auflagepunkte bildenden Nuten (2a,2b) oder kreuzförmig angeordneten Rippen gebildet sind, wobei die Kreuzungspunkte der Rippen die Auflagepunkte bilden.

22. Vorrichtung nach Anspruch 21, **dadurch gekennzeichnet, dass** die Vorrichtung mindestens zwei Formungseinrichtungen (6,9,11) zum Ausbilden mindestens zweier Nuten (2a,2b) oder Rippen aufweist und die erste Formungseinrichtung (6) zum Ausbilden der Nuten (2a) oder Rippen in einer ersten Richtung und die zweite Formungseinrichtung (9) zum Ausbilden der zweiten Nuten (2b) oder Rippen in relativ zu der ersten Formungseinrichtung (6) entgegengesetzter Richtung drehbar ist, um die Innenfläche der Kabelumhüllung (1) mit kreuzweise angeordneten Nuten (2a,2b) oder Rippen zu versehen.

23. Vorrichtung nach Anspruch 22, **dadurch gekennzeichnet, dass** die Formungseinrichtungen (6,9,11) zum Ausbilden der Nuten (2a,2b) oder Rippen in entgegengesetzte Richtungen mit im wesentlichen der gleichen Geschwindigkeit drehbar sind und der Teilungswinkel (α) der ersten Nuten (2a) oder Rippen dem Teilungswinkel (β) der zweiten Nuten (2b) oder Rippen im wesentlichen gleich ist.

24. Vorrichtung nach Anspruch 22 oder 23, **dadurch gekennzeichnet, dass** die Vorrichtung Formungseinrichtungen (6,9,11) zum Ausbilden der Nuten (2a,2b) auf der Innenfläche der Kabelumhüllung (1) aufweist.

25. Vorrichtung nach Anspruch 24, **dadurch gekennzeichnet, dass** die Formungseinrichtungen (6,9,11) Ausbuchtungen (7) zum Formen der Nuten (2a,2b) aufweist.

26. Vorrichtung nach Anspruch 24 oder 25, **dadurch gekennzeichnet, dass** die ersten Nuten (2a) von der ersten Formungseinrichtung (6) geformt werden, die in einer ersten Richtung drehbar ist, die zweiten Nuten (2b) von der zweiten Formungseinrichtung (9) geformt werden, die der ersten Formungseinrichtung (6) folgt und in relativ zu der ersten Formungseinrichtung (6) entgegengesetzten Richtung drehbar ist und der zweiten Formungseinrichtung (9) die dritte Formungseinrichtung (11) folgt, die in der gleichen Richtung und im wesentlichen mit der gleichen Geschwindigkeit wie die erste Formungseinrichtung (6) drehbar ist und die dritte Formungseinrichtung (11) die ersten Nuten (2a) fertigbearbeitet.

27. Vorrichtung nach einem der Ansprüche 22 bis 26, **dadurch gekennzeichnet, dass** eine Trimmeinrichtung (13) der Einrichtung zum Herstellen der Nuten (2a,2b) oder Rippen und zum Ebnen der Innenfläche der Kabelumhüllung (1) folgt.

28. Vorrichtung nach einem der Ansprüche 21 bis 27, **dadurch gekennzeichnet, dass** die Vorrichtung eine Zuleitungseinrichtung (15) zum Zuleiten eines Gleitmittels zu der Innenfläche der Kabelumhüllung (1) aufweist.

29. Vorrichtung nach einem der Ansprüche 21 bis 28, **dadurch gekennzeichnet, dass** die Vorrichtung mindestens drei Zuleitungseinrichtungen (16 bis 18) aufweist, zwischen denen mindestens zwei Zuleitungsspalte (19, 20) ausgebildet sind, und der Extruder (4) zum Herstellen einer Kabelumhüllung (1) mit mindestens zwei Schichten vorgesehen ist.

30. Vorrichtung nach einem der Ansprüche 21 bis 29, **dadurch gekennzeichnet, dass** der Extruder mindestens zwei konische Zuleitungseinrichtungen (16 bis 18) aufweist, zwischen denen mindestens ein konischer Zuleitungsspalt (19,20) ausgebildet ist.

31. Vorrichtung nach Anspruch 30, **dadurch gekennzeichnet, dass** die innere Zuleitungseinrichtung (17) oder ihr hinterer Teil (17a) drehbar ist und der hintere Teil (17a) der inneren Zuleitungseinrichtung (17) mit einer Ausbuchtung (7) versehen ist und die Zuleitungseinrichtung oder ihr hinterer Teil (17a) beim Drehen die Innenseite der Kabelumhüllung (1) mit einer Nut (2a,2b) in Form einer schraubenförmigen Linie versieht.

32. Vorrichtung nach Anspruch 30 oder 31, **dadurch gekennzeichnet, dass** die äußere Zuleitungseinrichtung (16) drehbar ist und die äußere Zuleitungseinrichtung (16) mindestens eine Nut (16a) aufweist und die äüßere Zuleitungseinrichtung (16) beim Herstellen der Kabelumhüllung (1) deren Außenfläche mit einer Rippe (21) in Form einer schraubenförmigen Linie versieht.

33. Vorrichtung nach einem der Ansprüche 30 bis 32, **dadurch gekennzeichnet**, das sich die innere Zuleitungseinrichtung (17) oder zumindest ihr hinterer Teil (17a) in axialer Richtung hin- und herbewegt, um die Innenfläche der Kabelumhüllung (1) mit einer Ausbuchtung in Umfangsrichtung zu versehen.

## Revendications

1. Tube pour câble présentant une surface intérieure rugueuse et une surface extérieure lisse, **caractérisé en ce que** la surface intérieure du tube pour câble est munie de points de support formés par point pour diminuer le frottement entre le câble et le tube pour câble moyennant quoi les points de support sont formés soit par des rainures entrecroisées (2a, 2b), des bords (3) entre les rainures (2a, 2b) formant les points de support, soit par des nervures entrecroisées, les points de croisement des nervures formant les points de support.

2. Tube pour câble selon la revendication 1, **caractérisé par** la surface intérieure du tube qui comprend au moins deux rainures (2a, 2b) ou nervures, les premières rainures (2a) ou nervures tournant sous la forme d'une hélice dans un premier sens et les secondes rainures (2b) ou nervures tournant dans un sens opposé par rapport aux premières rainures (2a) ou nervures, les premières rainures (2a) ou nervures et les secondes rainures (2b) ou nervures étant agencées dans le sens de la largeur.

3. Tube pour câble selon la revendication 1, **caractérisé par** l'angle de pas (α) des premières rainures (2a) ou nervures qui est sensiblement égal à l'angle de pas (β) des secondes rainures (2b) ou nervures.

4. Tube pour câble selon la revendication 2 ou 3, **caractérisé par** la surface intérieure du tube pour câble (1) qui comprend des rainures entrecroisées (2a, 2b), des bords (3) entre les rainures (2a, 2b) formant les points de support.

5. Tube pour câble selon l'une quelconque des revendications qui précèdent, **caractérisé par** la surface intérieure du tube pour câble (1) qui comprend un agent lubrifiant.

6. Tube pour câble selon l'une quelconque des revendications qui précèdent, **caractérisé par** le tube pour câble qui comprend au moins deux couches, la couche intérieure (1b) étant composée d'un matériau ou d'un mélange de matériaux présentant un faible coefficient de frottement.

7. Tube pour câble selon l'une quelconque des revendications qui précèdent, **caractérisé par** au moins la couche extérieure (1a) du tube pour câble (1) qui est renforcée par des fibres orientées dans la direction d'une hélice.

8. Tube pour câble selon l'une quelconque des revendications qui précèdent, **caractérisé par** le tube pour câble qui comprend un matériau électriquement conducteur ou un matériau magnétique.

9. Procédé de fabrication d'un tube pour câble, le procédé comprenant l'extrusion du tube pour câble et, sensiblement simultanément à l'extrusion, destiné à munir le tube pour câble (1) d'une surface intérieure rugueuse, **caractérisé en ce que** pendant l'extrusion du tube pour câble (1), son intérieur est muni de points de support formés par point pour diminuer le frottement entre le câble et la surface intérieure du tube pour câble moyennant quoi les points de support sont formés soit par des rainures entrecroisées (2a, 2b), des bords (3) entre les rainures (2a, 2b) formant les points de supports, soit par des nervures entrecroisées, les points de croisement des nervures formant les points de support.

10. Procédé selon la revendication 9, **caractérisé en ce que** lors de l'extrusion du tube pour câble (1), l'intérieur du tube pour câble (1) est muni d'au moins deux rainures (2a, 2b) ou nervures en faisant tourner au moins deux moyens de mise en forme (6, 9, 11) sur la surface intérieure du tube pour câble (1) dans des sens opposés, les premiers moyens de mise en forme (6) munissant la surface intérieure du tube pour câble (1) avec des premières rainures (2a) ou nervures, qui tournent sous la forme d'une hélice dans un premier sens et les deuxièmes moyens de mise en forme (9) munissant les secondes rainures (2b) ou nervures qui tournent dans un sens opposé par rapport aux premières rainures (2a) ou nervures, les premières rainures (2a) ou nervures et les secondes rainures (2b) ou nervures étant entrecroisées.

11. Procédé selon la revendication 10, **caractérisé en ce que** les vitesses de rotation des moyens de mise en forme (6, 9, 11) sont réglées sensiblement égales, l'angle de pas (α) des premières rainures (2a) ou nervures étant sensiblement égal à l'angle de pas (β) des secondes rainures (2b) ou nervures.

12. Procédé selon la revendication 10 ou 11, **caractérisé par** les moyens de mise en forme (6, 9, 11) qui sont utilisés pour munir l'intérieur du tube pour câble avec des rainures (2a, 2b).

13. Procédé selon la revendication 12, **caractérisé par** les premières rainures (2a) qui sont formées par les premiers moyens de mise en forme (6) en les faisant tourner dans un premier sens, les secondes rainures (2b) étant formées par les deuxièmes moyens de mise en forme (9) en les faisant tourner dans un second sens et par les premières rainures (2a) qui sont après finies par les troisièmes moyens de mise en forme (11) en les faisant tourner dans les même rainures (2a) avec les premiers moyens de mise en forme (6) dans le meme sens et sensiblement la même vitesse.

14. Procédé selon l'une quelconque des revendications 10 à 13, **caractérisé en ce qu'**après que les rainures (2a, 2b) ou nervures ont été formées, la surface intérieure du tube pour câble (1) est égalisée.

15. Procédé selon l'une quelconque des revendications 9 à 14, **caractérisé par** un agent lubrifiant qui est ajouté à la surface intérieure du tube pour câble (1).

16. Procédé selon l'une quelconques des revendications 9 à 15, **caractérisé par** le tube pour câble (1) qui est réalisé à partir d'au moins deux matériaux différents afin de fabriquer un tube présentant au moins deux couches.

17. Procédé selon l'une quelconque des revendications 9 à 16, **caractérisé par** le tube pour câble (1) qui est extrudé par une extrudeuse conique (4).

18. Procédé selon la revendication 17, **caractérisé par** l'extrudeuse (4) comprenant des moyens d'alimentation coniques (16 à 18), les moyens d'alimentation intérieurs (17) ou au moins leur partie arrière (17a) étant tournés et la partie arrière (17a) des moyens d'alimentation intérieurs (17) comprenant au moins un renflement, moyennant quoi une rainure de la forme d'une hélice est formée dans le tube pour câble (1) lors de la rotation des moyens d'alimentation intérieurs (17) ou de leur partie arrière (17a).

19. Procédé selon la revendication 17 ou 18, **caractérisé par** l'extrudeuse (4) qui comprend des moyens d'alimentation coniques (16 à 18), les moyens d'alimentation extérieurs (16) étant entraînés en rotation et les moyens d'alimentation extérieurs comprenant une rainure (16a), moyennant quoi une nervure (21) de la forme d'une hélice est formée dans le tube pour câble (1) lors de la rotation des moyens d'alimentation extérieurs (16).

20. Procédé selon l'une quelconque des revendications 17 à 19, **caractérisé par** l'extrudeuse (4) qui comprend des moyens d'alimentation (16 à 18), les moyens d'alimentation intérieurs (17) ou au moins leur partie arrière (17a) étant déplacés dans un mouvement de va-et-vient dans la direction axiale de manière à munir la surface intérieure du tube pour câble (1) avec des renflements dans la direction périphérique.

21. Appareil de fabrication d'un tube pour câble, l'appareil comprenant une extrudeuse (4) destinée à extruder le tube pour câble (1) et des moyens pour proposer le tube pour câble (1) avec un intérieur rugueux, **caractérisé par** l'appareil qui comprend des moyens destinés à munir l'intérieur du tube pour câble (1) avec des points de support formés par point pour diminuer le frottement entre le câble et la surface intérieure du tube pour câble (1) moyennant quoi les points de support sont formés soit par des rainures entrecroisées (2a, 2b), des bords (3) entre les rainures (2a, 2b) formant les points de support, soit par des nervures entrecroisées, les points de croisement des nervures formant les points de support.

22. Appareil selon la revendication 21, **caractérisé par** l'appareil qui comprend au moins deux moyens de mise en forme (6, 9, 11) destinés à former au moins deux rainures (2a, 2b) ou nervures, les premiers moyens de mise en forme (6) pour former les rainures (2a) ou nervures étant agencés pour tourner dans un premier sens et les deuxièmes moyens de mise en forme (9) pour former les secondes rainures (2b) ou nervures étant agencés pour tourner dans un sens opposé par rapport aux premiers moyens de mise en forme (6) afin de proposer la surface intérieure du tube pour câble (1) avec des rainures entrecroisées (2a, 2b) ou nervures.

23. Appareil selon la revendication 22, **caractérisé par** les moyens de mise en forme (6, 9, 11) destinés à former les rainures (2a, 2b) ou nervures qui sont agencés pour tourner dans des sens opposés à sensiblement la même vitesse, l'angle de pas (α) des premières rainures (2a) ou nervures étant sensiblement égal à l'angle de pas (β) des secondes rainures (2b) ou nervures.

24. Appareil selon la revendication 22 ou 23, **caractérisé par** l'appareil qui comprend des moyens de mise en forme (6, 9, 11) destinés à former les rainures (2a, 2b) sur la surface intérieure du tube pour câble.

25. Appareil selon la revendication 24, **caractérisé par** les moyens de mise en forme (6, 9, 11) qui comprennent des renflements (7) destinés à former les rainures (2a, 2b).

26. Appareil selon la revendication 24 ou 25, **caractérisé par** les premiers moyens de profilage (6), qui sont agencés pour pouvoir tourner dans un premier sens, les secondes rainures (2b) étant formées par les deuxièmes moyens de mise en forme (9) qui prennent la suite des premiers moyens (6) de mise en forme et qui sont agencés pour pouvoir tourner dans un sens opposé par rapport aux premiers moyens (6) de mise en forme, les deuxièmes moyens (9) de mise en forme étant suivis par les troisièmes moyens de mise en forme (11), agencés pour pouvoir tourner dans le même sens que les premiers moyens de mise en forme (6) à sensiblement à la même vitesse, les troisièmes moyens de mise en forme (11) étant agencés pour finir les premières rainures (2a).

27. Appareil selon l'une quelconque des revendications 22 à 26, **caractérisé par** des moyens de dressage (13) qui sont agencés pour succéder aux moyens destinés à former les rainures (2a, 2b) ou nervures, afin d'égaliser la surface intérieure du tube pour câble (1).

28. Appareil selon l'une quelconque des revendications 21 à 27, **caractérisé par** l'appareil qui comprend des moyens d'alimentation (15) pour introduire l'agent lubrifiant vers la surface intérieure du tube pour câble (1).

29. Appareil selon l'une quelconque des revendications 21 à 28, **caractérisé par** l'appareil comprenant au moins trois moyens d'alimentation (16 à 18), entre lesquels au moins deux espaces d'alimentation (19, 20) sont formés, l'extrudeuse (4) étant agencée afin de fabriquer un tube pour câble (1) comprenant au moins deux couches.

30. Appareil selon l'une quelconque des revendications 21 à 29, **caractérisé par** l'extrudeuse comprenant au moins deux moyens d'alimentation coniques (16 ou 18), entre lesquels au moins un espace d'alimentation conique (19, 20) est formé.

31. Appareil selon la revendication 30, **caractérisé par** les moyens d'alimentation intérieurs (17) ou leur partie arrière (17a) étant agencés de manière à pouvoir tourner et la partie arrière (17a) des moyens d'alimentation intérieurs (17) étant munie d'un renflement (7), les moyens d'alimentation ou leur partie arrière (17a), lors de la rotation, munissant l'intérieur du tube pour câble (1) avec une rainure (2a, 2b) de la forme d'une hélice.

32. Appareil selon la revendication 30 ou 31, **caractérisé par** les moyens d'alimentation extérieurs (16) étant agencés de manière à pouvoir tourner les moyens d'alimentation extérieurs et les moyens d'alimentation extérieurs (16) comprenant au moins une rainure, les moyens d'alimentation extérieurs, lors de la fabrication du tube pour câble (1), munissant sa surface extérieure avec une nervure (21) de la forme d'une hélice.

33. Appareil selon l'une quelconque des revendications 30 à 32, **caractérisé par** les moyens d'alimentation intérieurs (17) ou au moins leur partie arrière (17a) qui sont agencés pour se déplacer selon un mouvement de va-et-vient dans la direction axiale afin de munir la surface intérieure du tube pour câble (1) d'un renflement dans la direction périphérique.
